# EUROPEAN PATENT APPLICATION

(11) **EP 4 567 747 A1**
(43) Date of publication of application: **11.06.2025**
(21) Application number: 24218127.9
(22) Date of filing: 06.12.2024
(51) Int. Cl.: G06V 10/82, G06V 20/54, G06V 20/58, G06V 10/80

(54) **CROSS MODAL TARGET STATE DETECTION METHOD AND DEVICE, SMART DEVICE, AND MEDIUM**

(30) Priority: 08.12.2023 CN 202311676768
(71) Applicant: Anhui NIO Autonomous Driving Technology Co., Ltd., Hefei, Anhui 230601 (CN)
(72) Inventor: LI, Chuankang, Jiading Shanghai (CN); WANG, Sukai, Jiading Shanghai (CN); WANG, Yunlong, Jiading Shanghai (CN); SHAN, Wei, Jiading Shanghai (CN); YAO, Maoqing, Jiading Shanghai (CN)
(74) Representative: Vossius & Partner Patentanwälte Rechtsanwälte mbB

(57) **Abstract**

The invention provides a cross-modal target state detection method and device, a smart device, and a medium. The method includes: performing sampling on an initial target detection sequence to obtain a sampled target detection sequence; performing feature extraction on a current target in a current time frame and a first historical target in a historical time frame in the sampled target detection sequence, to obtain first feature information of the current target and historical feature information of the first historical target; obtaining second feature information of the current target based on the first feature information and the historical feature information of the first historical target, and inputting the second feature information into a state prediction network to obtain state information about the current target. In this way, the separation of target detection and state prediction is implemented, and there is no need to set different branches on a network, such that the network structure is made relatively simple, and it will not be affected by results of upstream detection. Further, a state prediction network that prevents an abrupt state change is used for state prediction, which improves the accuracy of state prediction.

## Description

The present application claims priority of CN patent application 202311676768.6 filed on December 8, 2023 with the title "Cross-modal target state detection method and device, smart device, and medium", the entire of which is incorporated herein by reference.

### Technical Field

The invention relates to the field of target detection technologies, and specifically provides a cross-modal target state detection method and device, a smart device, and a medium.

### Background Art

The functions of autonomous driving are increasingly recognized by people, and the functions expected by users have also been further improved with the advancement of sensors and information technology. Correctly tracking a target in a perception scene to provide complete and accurate environmental information for downstream planning and control (PNC), autonomous emergency braking (AEB) and other functional modules helps improve the user experience.

In the related art, cross-modal target state detection methods may be roughly divided into two categories: 1) Detection method based on rule-based filtering; and 2) Detection method based on a pre-fusion neural network.

In the detection method based on rule-based filtering, it is generally assumed that an object moves at a constant velocity or at a constant acceleration. Based on a state quantity of a target in a historical time frame, a state quantity of the target in a current time frame is predicted by using equations of motion in classical physics and Kalman filtering. However, this method has the following disadvantages. (1) The state quantity of the target in the current time frame depends on the state quantity of the target in the historical time frame, which is easily affected by upstream noise, resulting in an error accumulation effect. (2) For cross-modal data, different modal data have different degree of jitter, and thus have a relatively low accuracy of prediction results.

In the detection method based on a pre-fusion neural network, cross-modal data such as radar point cloud data and camera image data are usually used as input data, and are then separately subjected to feature extraction by different branches, such that a feature map is obtained through fusion inside the network, and finally the target is detected and the state of the target is predicted. However, this method has the following disadvantages. An overall model is used for target detection and state prediction, and corresponding branches need to be set for each type of modal data, which makes the model complex.

Therefore, how to accurately predict a target state by using a relatively lightweight model is a technical problem that needs to be solved urgently by those skilled in the art.

### Summary

To overcome the above disadvantages, the invention is proposed to provide a cross-modal target state detection method and device, a smart device, and a medium that solve or at least partially solve the technical problems of low accuracy in predicting a target state and a complex model for predicting a target state.

According to a first aspect, the invention provides a cross-modal target state detection method. The cross-modal target state detection method includes:
performing sampling on an initial target detection sequence to obtain a sampled target detection sequence, where the sampled target detection sequence includes at least a first sequence and a second sequence; the first sequence is a time frame sequence that is obtained at a first sampling frequency based on a target detection result of first modal data; the second sequence is a time frame sequence that is obtained at a second sampling frequency based on a target detection result of second modal data; and the sampled target detection sequence includes a current time frame and a plurality of historical time frames in the initial target detection sequence;
performing feature extraction on each current target and each first historical target to obtain first feature information of the current target and historical feature information of the first historical target, where the current target is a target within the current time frame; and the first historical target is a target within each of the historical time frames;
obtaining second feature information of the current target based on the first feature information and the historical feature information of the first historical target; and
inputting the second feature information into a pre-trained state prediction network to obtain state information about the current target,
where the state information includes velocity information and/or orientation information; and the state prediction network is obtained through training based on constraints for preventing an abrupt state change.

According to a second aspect, the invention provides a cross-modal target state detection device. The cross-modal data-based target state detection device includes at least one processor and a storage apparatus configured to store a plurality of program codes, and the program codes are adapted to be loaded and executed by the at least one processor to perform the cross-modal target state detection method according to the above aspect.

According to a third aspect, a smart device is provided, where the smart device may include the cross-modal target state detection device as described above.

According to a fourth aspect, a non-transitory computer-readable storage medium is provided, where the non-transitory computer-readable storage medium stores a plurality of program codes, and the program codes are adapted to be loaded and executed by the at least one processor to perform the cross-modal target state detection method according to any one of the above aspects.

The one or more technical solutions of the invention described above have at least one or more of the following beneficial effects.

In the technical solutions for implementing the invention, the sampling is performed on the initial target detection sequence to obtain the sampled target detection sequence; the feature extraction is performed on each current target in the current time frame and each first historical target in each historical time frame in the sampled target detection sequence, to obtain the first feature information of the current target and the historical feature information of the first historical target; the second feature information of the current target is obtained based on the first feature information of the current target and the historical feature information of the first historical target; and the second feature information is input into the pre-trained state prediction network to obtain the state information about the current target. In this way, the separation of target detection and state prediction is implemented, making each model lightweight. In addition, multiple types of modal data are input, as a whole piece of time sequence data, into a network structure for subsequent state prediction, which eliminates the need to set different branches for feature extraction and simplifies the network structure. Moreover, the use of the state prediction network that can prevent an abrupt state change for state prediction allows the state information about the current target in the current time frame to be accurately predicted when the cross-modal data includes modal data with a high degree of jitter.

### Brief Description of the Drawings

The disclosed content of the invention will become more readily understood with reference to the accompanying drawings. Those skilled in the art readily understand that these accompanying drawings are merely for illustrative purposes and are not intended to limit the scope of protection of the invention. In addition, similar numbers in the figures are used to represent similar components, in which:
FIG. 1 is a schematic flowchart of main steps of a cross-modal target state detection method according to an embodiment of the invention;
FIG. 2 is a schematic diagram of input data for a cross-modal target state detection method according to the invention;
FIG. 3 is a schematic diagram of an initial target detection sequence corresponding to target detection results of different modal data;
FIG. 4 is a schematic diagram of a network structure for target state detection according to the invention;
FIG. 5 is a schematic diagram of a real-world scenario in which a target state detection method according to the invention is used; and
FIG. 6 is a block diagram of a main structure of a cross-modal data-based target state detection device according to an embodiment of the invention.

### Detailed Description of Embodiments

Some implementations of the invention are described below with reference to the accompanying drawings. Those skilled in the art should understand that these implementations are only used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

An automated driving system (ADS) means that the system continuously performs all dynamic driving tasks (DDTs) within its own operational domain design (ODD). That is, a machine system is allowed to fully undertake the task of automatic vehicle maneuvering only under specified conditions of appropriate driving scenarios. Specifically, the system is activated when the vehicle meets the ODD conditions, such that the system takes over from a human driver as the driving subject of the vehicle. The dynamic driving task (DDT) refers to continuous lateral (left and right steering) and longitudinal motion control (acceleration, deceleration, and constant speed) of the vehicle, as well as detection of and response to a target and an event in a driving environment of the vehicle. The operational domain design (ODD) refers to conditions under which the automated driving system can operate safely, and the conditions set therefor can include a geographical location, a road type, a speed range, weather, time, national and local traffic laws and regulations, etc.

Correctly predicting the state of the target in a perception scene of the ADS to provide complete and accurate environmental information for downstream PNC, AEB and other functional modules helps improve the user experience. Therefore, to accurately predict the state of the target, the invention provides the following technical solutions.

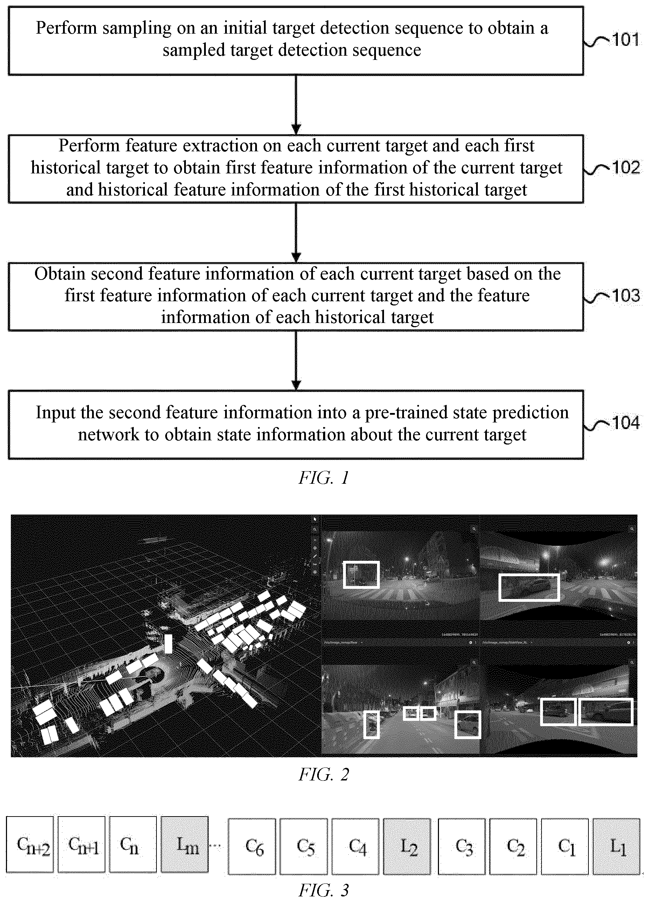

Referring to FIG. 1, FIG. 1 is a schematic flowchart of main steps of a cross-modal target state detection method according to an embodiment of the invention. As shown in FIG. 1, the cross-modal target state detection method in this embodiment of the invention mainly includes steps 101 to 104 below.

Step 101: Perform sampling on an initial target detection sequence to obtain a sampled target detection sequence.

In a specific implementation process, a variety of sensing devices may be configured to perform sensing on the current scene, and each sensing device can result in sensing data of the current scene, which are represented in different forms instead. The sensing data represented in different forms may be used as cross-modal data. After the cross-modal data of the current scene is collected, the cross-modal data may be input into a pre-trained target detection model, to obtain target detection results of each type of modal data, and the target detection results of each type of modal data are sorted in chronological order, to obtain a sorting result as the initial target detection sequence. FIG. 2 is a schematic diagram of input data for a cross-modal target state detection method according to the invention. In FIG. 2, the right side shows target detection results corresponding to a 360° global image of an ego vehicle that are obtained by a camera (in FIG. 2, only some of targets are annotated, and the parts in the boxes on the right side are detected target bounding boxes), and the left side shows target detection results corresponding to a point cloud that are obtained by a radar (parts in the white boxes in the figure are detected target bounding boxes).

In a specific implementation process, the cross-modal data of the current scene includes at least first modal data and second modal data, and the first modal data and the second modal data may be input into the target detection model to obtain a target detection result of the first modal data and a target detection result of the second modal data; and the initial target detection sequence is formed based on the target detection result of the first modal data and the target detection result of the second modal data. For details of the initial target detection sequence, reference may be made to FIG. 3.

FIG. 3 is a schematic diagram of an initial target detection sequence corresponding to target detection results of different modal data. In FIG. 3, a description is given by using a radar with a detection frequency of 10 Hz and a camera with a detection frequency of 30 Hz as an example. In FIG. 3, the target detection results are sorted in an order of a target detection result of one point cloud frame, followed by target detection results of three image frames, and so on, and the sorting result is obtained as the initial target detection sequence. As shown in FIG. 2, the initial target detection sequence may be L₁C₁C₂C₃L₂C₄C₅C₆...LₘCₙCₙ₊₁Cₙ₊₂. A time frame corresponding to L₁ is a current time frame in the initial target detection sequence, and time frames corresponding to the remaining target detection results may be historical time frames in the initial target detection sequence. After the initial target detection sequence is obtained, sampling may be performed on the initial target detection sequence to obtain a sampled target detection sequence, where the sampled target detection sequence includes the current time frame and a plurality of historical time frames in the initial target detection sequence. The specific number of samples may be determined by a preset time window. Theoretically, a larger time sequence length T of the preset time window indicates a greater quantity of information of historical frames to which the model may refer, and thus a smoother and more stable output. However, increasing the time sequence length T results in a diminishing marginal return, historical frames that are too distant bring about limited benefits, and the computing power overheads increase exponentially. Therefore, in the method, the time sequence length may be set but not limited to T=10, to strike a balance between the accuracy of prediction results and the computing power.

In a specific implementation process, the cross-modal data includes at least two types of modal data, which may be first modal data and second modal data herein, and the corresponding initial target detection sequence includes at least a first sequence and a second sequence. During sampling, target detection results of the first modal data of a first preset number of frames may be obtained from the initial target detection sequence at a first sampling frequency, and then sorted, and a time frame sequence including the target detection results of the first modal data may be obtained as the first sequence. Target detection results of the second modal data of a second preset number of frames may be obtained from the initial target detection sequence at a second sampling frequency, and then sorted, and a time frame sequence including the target detection results of the second modal data may be obtained as the second sequence. The first sequence and the second sequence jointly form the sampled target detection sequence.

It should be noted that the cross-modal data can also include third modal data, fourth modal data, etc., and the corresponding initial target detection sequence can also include a third sequence, a fourth sequence, etc. During sampling, the sampling may be performed at separate sampling frequencies, and finally all the sequences jointly form the target detection sequence. Details are not described again herein.

In a specific implementation process, the first modal data is an image collected by a camera, and the camera has a detection frequency of 30 HZ. Assuming that the first sampling frequency is also 30 HZ, target detection results of the closest five image frames may be sampled, as the first sequence, from the initial target detection sequence shown in FIG. 3. The sorting result of the target detection results is as follows: C₁, C₂, C₃, C₄, C₅. The second modal data is a point cloud collected by a radar, and the radar has a detection frequency of 10 HZ. Assuming that the second sampling frequency is also 10 HZ, target detection results of the closest five frames of the point cloud may be sampled, as the second sequence, from the initial target detection sequence shown in FIG. 2. The sorting result of the target detection results is as follows: L₁, L₂, L₃, L₄, L₅. After the first sequence and the second sequence are sorted again in chronological order, a sorting result is obtained as the sampled target detection sequence, which is specifically arranged as follows: L₅L₄L₃C₅C₄L₂C₃C₂C₁L₁.

Assuming that the first sampling sequence has a sampling frequency of 10 HZ, target detection results of the closest seven image frames may be sampled, as the first sequence, from the initial target detection sequence shown in FIG. 2. The sorting result of the target detection results is as follows: C₁, C₄, C₇, C₁₀, C₁₃, C₁₆, C₁₉. Assuming that the second sampling frequency is 5 HZ, target detection results of the closest three frames of the point cloud may be sampled, as the second sequence, from the initial target detection sequence shown in FIG. 2. The sorting result of the target detection results is as follows: L₁, L₃, L₅. After the first sequence and the second sequence are sorted again in chronological order, a sorting result is obtained as the sampled target detection sequence, which is specifically arranged as follows: C₁₉C₁₆C₁₃L₅C₁₀C₇L₃C₄C₁L₁.

It should be noted that the above two methods for obtaining the sampled target detection sequence are only illustrative, and during practical application, the first sampling frequency and the second sampling frequency may be set according to actual needs, such that a more flexible cross-modal data input strategy can be supported. In addition, the time frame corresponding to the target detection result of the image being used as the current time frame is used as an example in the above two sampling methods. Actually, the current time frame can also be the time frame corresponding to the target detection result of the point cloud. That is, the current time frame in the sampled target detection sequence is a time frame closest to a current moment in the first sequence and the second sequence. The plurality of historical time frames in the sampled target detection sequence are formed by arranging the remaining time frames in the first sequence and the second sequence in chronological order.

Specifically, as shown in FIG. 3, the time frame C₁ in the first sequence and the time frame L₁ in the second sequence are respectively the time frames closest to the current moment in the two sequences. A first difference between a moment corresponding to the time frame C₁ in the first sequence and the current moment and a second difference between a moment corresponding to the time frame L₁ in the second sequence and the current moment may be separately calculated. If the first difference is greater than the second difference, the time frame L₁ in the second sequence is used as the current time frame in the sampled target detection sequence, and the time frame C₁ to the time frame Cₙ₊₂ in the first sequence and the time frame L₂ to the time frame Lₘ in the second sequence are sorted in chronological order to form a plurality of historical time frames in the sampled target detection sequence. Otherwise, if the first difference is less than the second difference, the time frame C₁ in the first sequence is used as the current time frame in the sampled target detection sequence. The time frame C₂ to the time frame Cₙ₊₂ in the first sequence and the time frame L₁ to the time frame Lₘ in the second sequence are sorted in chronological order to form a plurality of historical time frames in the sampled target detection sequence.

Step 102: Perform feature extraction on each current target and each first historical target to obtain first feature information of the current target and historical feature information of the first historical target.

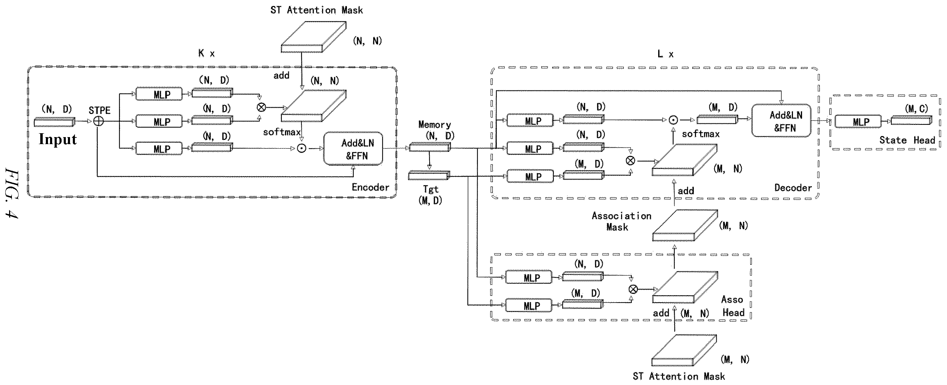

In a specific implementation process, based on the network structure shown in FIG. 4, feature extraction may be performed on each current target in the current time frame and each first historical target in the historical time frames by using an encoder, to obtain the first feature information of each current target and the feature information of each first historical target. That is, encoding may be performed on the current target and the first historical target to obtain the first feature information and the historical feature information of the first historical target.

FIG. 4 is a schematic diagram of a network structure for target state detection according to the invention. As shown in FIG. 4, the network structure may include K encoders, J decoders, a first mask attention information network (Asso Head network), a second mask attention information network, and a state prediction network (State Head network). The current target in the current time frame and the first historical target in the historical time frames in step 102 are input, and mapping vectors of the input data are obtained through a multi-layer perceptron (MLP). Based on second mask attention information (ST Attention Mask), feature information Memory of targets Key in all time frames may be output through a softmax activation function, an Add&LN network, an FFN network, etc. The feature information Memory of the targets Key in all the time frames may include the first feature information of the current target in the current time frame and the historical feature information of the first historical target in the historical time frames. Tgt is the first feature information of the current target Query in the current time frame, which may be obtained by taking the last M ones from Memory. The Asso Head network outputs an association matching result of the current target Query (that is, an association between the current target Query and all target Keys) as the first mask attention information (Association Mask), where the first mask attention information is used to indicate the first historical target that matches the current target. Therefore, the first mask attention information may be used to guide the decoder to pay attention only to the first historical target that matches the current target itself, that is, only to the historical state information about the first historical target that matches the current target itself. The multi-layer perceptron (MLP), softmax activation function, Add&LN network, the FFN network, etc. in the decoder can obtain the second feature information of each current target and input the second feature information of each current target to the State Head network, and then the state information about each current target is output through the State Head network.

The input of the network structure in this embodiment is a target detected by a target detection model, that is, the network structure is only used for state prediction. Therefore, the separation of target detection and state prediction is implemented, making each model lightweight, such that they are more suitable for actual product development practice, facilitate iterations, and allow for problem solving in a modular manner, and may be optimized separately under two teams, and then merged at the time of final deployment. In addition, a variety of modal data may be input, as a whole piece of time sequence data, into the network structure for subsequent state prediction, which eliminates the need to set different branches for feature extraction, thereby simplifying the network structure. In FIG. 4, M represents a maximum number of targets in a time frame, with a total of T time frames (the current time frame T and (T-1) historical time frames), and N=T*M represents a maximum number of targets in all the time frames. C is a dimension that represents the current target after decoding.

In a specific implementation process, during prediction of a matching relationship, when a similarity between the two targets in terms of spatio-temporal, type, and size, and other feature information meets a preset condition, it is unlikely that a matching relationship is formed between the two targets, and then the two targets may be excluded from network training and inference. Specifically, the preset condition may be that if the two targets have part of similar feature information (for example, similar type, size, and other feature information), but the two targets are detected at a time interval exceeding preset duration, it can be determined that it is impossible to form a matching relationship between the two targets. For another example, if the two targets have part of similar feature information, but the two targets appear in different spaces, it can also be determined that it is impossible to form a matching relationship between the two targets. For still another example, if two targets have part of similar feature information (for example, similar spatio-temporal, and other feature information), but are of completely different types, or have a size difference greater than a preset difference, it can also be determined that it is impossible to form a matching relationship between the two targets.

On this basis, a matrix corresponding to a matching possibility may be first calculated as a preset second mask attention mechanism, and then feature extraction may be performed on the current target and the first historical target based on the preset second mask attention information, to obtain the first feature information and the historical feature information of the first historical target. In this way, some first historical targets that have no possibility of matching with the current target are removed as much as possible, and then feature extraction is performed on the first historical target.

In a specific implementation process, spatio-temporal feature embedding may be implemented by a spatio-temporal positional embedding (STPE) module. Through STPE, a Transformer network can further distinguish elements at different positions and time frames, and better deal with dependencies in the sequence in the attention mechanism. STPE may be fixed, or may be learnable. The fixed STPE may be generated by some mathematical functions (such as a sine function and a cosine function), while the learnable STPE may be updated through back propagation during training. A fixed sine function and cosine function may be used in this embodiment.

Therefore, spatio-temporal feature embedding and encoding may be performed on each current target in the current time frame and each first historical target in the historical time frames based on the preset second mask attention information, to obtain the first feature information of each current target and the feature information of each historical target. The spatio-temporal positional embedding is used to enhance a feature representation of the current target and a feature representation of the first historical target.

It should be noted that in this embodiment, the required feature information may be extracted according to actual needs, which can facilitate improving the accuracy of Association Mask prediction by using richer feature information, thereby further facilitating state prediction.

Step 103: Obtain second feature information of each current target based on the first feature information of each current target and the feature information of each historical target.

In a specific implementation process, step 103 may be implemented as follows based on the network structure shown in FIG. 4.
(1) Determine first mask attention information for the current time frame based on the first feature information and the historical feature information for the first historical target.

In a specific implementation process, prediction of the state of the target is generally related only to historical state information about the target. Therefore, association matching may be performed on each current target based on the first feature information of each current target and the historical feature information of each first historical target, to obtain an association matching result of each current target as the first mask attention information for the current time frame. Association Mask may be, but is not limited to, a 0/1 matrix with shape=(M, N), which is learned by the Asso Head network. Each element in Mask represents [a matching score] between the current target Query and all the Keys ("1" indicates no match, and "0" indicates a match). For one current target Query, there is at most only one associated target at each moment, and the current target must be associated with the target itself at the current moment. Therefore, there are at most T zeros and at least one zero in each line of Mask. That is, there may be T zeros when all historical targets in the historical frames are associated with the current target, and there is only one zero when the current target is only associated with the target itself.

Specifically, the historical feature information of the first historical target that is different from the first feature information of the current target may be filtered out based on the preset second mask attention information, the first feature information of each current target, and the historical feature information of each first historical target, to obtain historical feature information of a second historical target, so as to facilitate training convergence and inference performance of the encoder, and obtain the association matching result of the current target based on the current feature information of the current target and the historical feature information of the second historical target. The second historical target is a historical target that has a possibility of matching with the current target.

(2) Obtain second feature information of each current target based on the first mask attention mechanism, the first feature information of each current target, and the feature information of each historical target.

In a specific implementation process, after obtaining Association Mask, the Asso Head network may input same into the decoder, to guide the decoder to pay attention only to the first historical target that matches the current target itself, and perform decoding based on the first feature information of each current target and the historical feature information of each first historical target to obtain the second feature information of each current target. The second feature information of each current target is input into the State Head network, and then the state information about each current target is output through the State Head network.

Step 104: Input the second feature information into a pre-trained state prediction network to obtain state information about the current target.

In a specific implementation process, the state information about the current target may include orientation information. In this case, the second feature information may be input into an orientation head network in the state prediction network for prediction, to obtain the orientation information of the current target. The orientation information of the current target may include an orientation angle, a yaw angle, a pitch angle, a roll angle, etc. of the current target. The orientation angle refers to an angle formed by rotating the direction of the target object in the direction of due north or south as a starting direction to a target direction line of the target object with the position of the target object as the center, and the target direction line may point to a direction of motion of the target object. The pitch angle refers to an included angle between the direction of motion of the target object and a horizontal plane. The yaw angle refers to an included angle between a projection direction of the direction of motion of the target object on the horizontal plane and a predetermined direction of the target object on the horizontal plane, where the predetermined direction may be set to the direction of a road. The roll angle is used to represent a lateral inclination angle.

In a specific implementation process, the state information about the current target may include velocity information. In this case, the second feature information may be input into a velocity head network in the state prediction network for prediction, to obtain the velocity information of the current target. The velocity information may include, but is not limited to, a velocity value and an acceleration value of the current target. If the current target is moving, it may be predicted that neither the velocity value nor acceleration value of the current target is 0. If the current target is stationary, it may be predicted that both the velocity value and acceleration value of the current target are 0.

In a specific implementation process, for cross-modal data, different modal data have different degree of jitter, especially an image collected by a camera has a high degree of jitter. In this case, there may be different target states in two consecutive time frames, which reduces the reliability of the finally obtained state information about the current target. Therefore, in this embodiment, the state prediction network may be obtained through training based on preset constraints for preventing an abrupt state change.

Specifically, the constraints for preventing an abrupt state change may include, but is not limited to, at least one of a constraint for suppressing an abrupt target position change, a constraint for suppressing an abrupt target motion magnitude change, and a constraint for suppressing an abrupt target orientation change.

The constraint for suppressing an abrupt target position change allows the position and size to change between frames more smoothly, which alleviates a jitter phenomenon.

For most moving targets, they may not change their states of motion instantaneously. Therefore, in this embodiment, the constraint for suppressing an abrupt target motion magnitude change may be set to inhibit an abrupt change in the motion magnitude, keeping coherent and stable network prediction.

Generally, the target itself does not abruptly change its orientation by 180° most of the time. Therefore, the constraint for suppressing an abrupt target orientation change may be set to apply an orientation constraint to both the current frame and the historical frame, forcing two consecutive frames of the target to be maintained in the same orientation.

In a specific implementation process, during the training of a network to be trained using training data, a parameter update is performed on the network to be trained by using network update parameters until a training stop condition is met, to obtain the state prediction network. The network update parameters are obtained as follows.
(11): Obtain a first network update parameter based on the constraint for suppressing an abrupt target position change and a training result of each training; and/or obtain a second network update parameter based on the constraint for suppressing an abrupt target motion magnitude change and a training result of each training; and/or obtain a third network update parameter based on the constraint for suppressing an abrupt target orientation change and a training result of each training.
In a specific implementation process, a corresponding training result may be obtained after each training, and then the training result may be detected and compared with a real state of the target, to determine whether the corresponding constraint is met, and thus set corresponding network update parameters.

Specifically, for the constraint for suppressing an abrupt target position change, a position difference of the target in the two consecutive frames may be calculated, and then a difference between two adjacent position differences may be calculated to determine whether the difference is less than a preset difference, so as to determine whether the constraint for suppressing an abrupt target position change is met. If the difference between the two adjacent position differences is less than the preset difference, which indicates that the constraint for suppressing an abrupt target position change is met, the network parameters are no longer updated. If the difference between the two adjacent position differences is not less than the preset difference, which indicates that the constraint for suppressing an abrupt target position change is not met, a first network update parameter may be obtained.

For the constraint for suppressing an abrupt target motion magnitude change, a state curve for the target over a period of time may be calculated, and after a training result is obtained, the training result may be converted into a state curve. If the two state curves are basically consistent, which indicates that the constraint for suppressing an abrupt target motion magnitude change is met, the network parameters are no longer updated. If the two state curves vary enormously, which indicates that the constraint for suppressing an abrupt target motion magnitude change is not met, a second network update parameter may be obtained.

For the constraint for suppressing an abrupt target orientation change, an orientation of the target in a certain period of time may be set, and after a training result is obtained, if there is a small error between an orientation in the training result and the set direction, which indicates that the constraint for suppressing an abrupt target orientation change is met, the network parameters are no longer updated. If there is a large error between the orientation and the set direction, which indicates that the constraint for suppressing an abrupt target orientation change is not met, a third network update parameter may be obtained.

(12): Obtain the network update parameters based on at least one of the first network update parameter, the second network update parameter, and the third network update parameter.

Specifically, in the case of at least two network update parameters, considering that during prediction of the state of the target, the abrupt target position change, the abrupt target motion magnitude change, the abrupt target orientation change, etc. have different impacts on the accuracy of state prediction, a corresponding weight may be set for the network update parameter obtained under each abrupt change constraint, and then after at least two network update parameters are obtained, weighted summation may be performed on the at least two network update parameters to obtain final network update parameters.

It should be noted that the weight corresponding to each network update parameter may be fixed or change depending on real-time scenarios. For example, for a traveling uphill scene, the target more frequently changes their orientation (an angle to a ramp) with the ramp. In this case, a larger weight corresponding to the third network update parameter may be set, while a smaller weight may be set for each of the first network update parameter and the second network update parameter. On an even road surface, the target less frequently changes their orientation. In this case, a smaller weight corresponding to the third network update parameter may be set, while a larger weight may be set for each of the first network update parameter and the second network update parameter. Details are not described again herein. According to the cross-modal target state detection method in this embodiment, the sampling is performed on the initial target detection sequence to obtain the sampled target detection sequence; the feature extraction is performed on each current target in the current time frame and each first historical target in each historical time frame in the sampled target detection sequence, to obtain the first feature information of the current target and the historical feature information of the first historical target; the second feature information of the current target is obtained based on the first feature information of the current target and the historical feature information of the first historical target; and the second feature information is input into the pre-trained state prediction network to obtain the state information about the current target. In this way, the separation of target detection and state prediction is implemented, making each model lightweight. In addition, multiple types of modal data are input, as a whole piece of time sequence data, into a network structure for subsequent state prediction, which eliminates the need to set different branches for feature extraction and simplifies the network structure. Moreover, the use of the state prediction network that can prevent an abrupt state change for state prediction allows the state information about the current target in the current time frame to be accurately predicted when the cross-modal data includes modal data with a high degree of jitter.

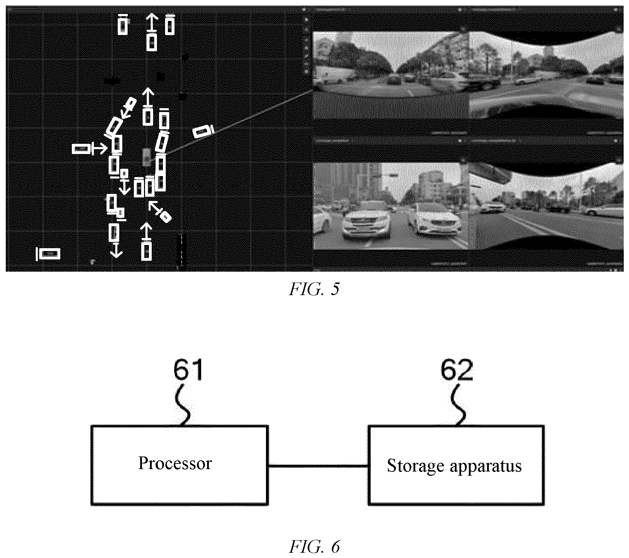

FIG. 5 is a schematic diagram of a real-world scenario in which a target state detection method according to the invention is used. As shown in FIG. 5, camera data for an ego vehicle within a range of 360° may be obtained by a camera from a bird's-eye view, and data of a front view of the ego vehicle may be obtained by a radar (no longer shown in FIG. 5). After target detection is performed on the two types of data, and a target detection result of the current time frame and a target detection result of the historical time frame are selected and then input into the network structure for target detection in the invention, accurate state information such as the vehicle velocity and orientation of the ego vehicle within the range of 360° may be output.

It should be noted that although the steps are described in a particular sequence in the above embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

Those skilled in the art may understand that all or some of the procedures in the methods in the above embodiments of the invention may be implemented by using a computer program instructing related hardware. The computer program may be stored in a non-transitory computer-readable storage medium. When the computer program is executed by at least one processor, the steps in the above method embodiment may be implemented. The computer program includes computer program code, and the computer program code may be in the form of source code, target code, and an executable file, or in some intermediate forms, etc. The non-transitory computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the non-transitory computer-readable storage medium may be appropriately added or deleted depending on requirements of the legislation and patent practice in a jurisdiction. For example, in some jurisdictions, according to the legislation and patent practice, the non-transitory computer-readable storage medium does not include an electric carrier signal and a telecommunications signal.

Further, the invention also provides a cross-modal data-based target state detection device.

Referring to FIG. 6, FIG. 6 is a block diagram of a main structure of a cross-modal data-based target state detection device according to an embodiment of the invention. As shown in FIG. 6, the cross-modal data-based target state detection device in this embodiment of the invention may include a processor 61 and a storage apparatus 62.

The storage apparatus 62 may be configured to store a program for performing the cross-modal target state detection method in the above method embodiment. The processor 61 may be configured to execute a program in the storage apparatus 62, where the program includes, but is not limited to, the program for performing the cross-modal target state detection method in the above method embodiment. For ease of description, only parts related to the embodiments of the invention are shown. For specific technical details that are not disclosed, refer to the method part of the embodiments of the invention. The cross-modal data-based target state detection device may be a control device formed by various electronic devices.

In a specific implementation process, there may be a plurality of storage apparatuses 62 and a plurality of processors 61. The program for performing the cross-modal target state detection method in the above method embodiment may be divided into a plurality of segments of subprograms, and the subprograms may be separately loaded and executed by the processor 61 to perform different steps of the cross-modal target state detection method in the above method embodiment. Specifically, the subprograms may be separately stored in different storage apparatuses 62. Each processor 61 may be configured to execute the program in one or more storage apparatuses 62, to jointly implement the cross-modal target state detection method in the above method embodiment. That is, each processor 61 separately performs different steps of the cross-modal target state detection method in the above method embodiment, to jointly implement the cross-modal target state detection method in the above method embodiment.

The plurality of processors 61 may be processors deployed on the same device. For example, the above device may be a high-performance device formed by a plurality of processors. The plurality of processors 61 may be processors configured on the high-performance device. In addition, the plurality of processors 61 may also be processors deployed on different devices. For example, the above device may be a server cluster, and the plurality of processors 61 may be processors on different servers in the server cluster.

Further, the invention also provides a smart device, where the smart device includes the cross-modal target state detection device in the above embodiment. The smart device may specifically include a driving device, an autonomous vehicle, a smart vehicle, a robot, an unmanned aircraft, etc.

In some embodiments of the invention, the smart device further includes at least one sensor for sensing information. The sensor is in communication connection with any type of processor mentioned in the invention. Optionally, the smart device further includes an automated driving system configured to guide the smart device to drive autonomously or assist in driving. The processor communicates with the sensor and/or the automated driving system to perform the method described in any one of the above embodiments.

The invention further provides a non-transitory computer-readable storage medium. In a computer-readable storage medium embodiment according to the invention, the computer-readable storage medium may be configured to store a program for performing the cross-modal target state detection method in the above method embodiment, where the program may be loaded and executed by a processor to implement the above cross-modal target state detection method. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, it should be understood that, since the configuration of modules is merely intended to illustrate function units of the apparatus in the invention, physical devices corresponding to these modules may be a processor itself, or part of software, part of hardware, or part of a combination of software and hardware in the processor. Therefore, the quantity of modules in the figure is merely illustrative.

Those skilled in the art can understand that the modules in the apparatus may be adaptively split or combined. Such a split or combination of specific modules does not cause the technical solutions to depart from the principle of the invention. Therefore, technical solutions after any such split or combination shall all fall within the scope of protection of the invention.

It should be noted that the related user personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user's personal information processed in the invention varies depending on the specific product/service scenario, and shall be subject to the specific scenario in which the user uses the product/service. It may involve account information, device information, driving information, vehicle information, or other related information of the user. The user's personal information and processing thereof shall be treated in the invention with a high degree of diligence.

The invention attaches great importance to the security of the user personal information, and reasonable and feasible security protection measures that comply with industry standards have been taken to protect information of the user and prevent the personal information from unauthorized access, public disclosure, use, modification, damage or loss.

Heretofore, the technical solutions of the invention have been described in combination with the implementations shown in accompanying drawings. However, those skilled in the art can readily understand that the scope of protection of the invention is apparently not limited to these particular implementations. Those skilled in the art can make equivalent changes or substitutions to the related technical features without departing from the principle of the invention, and all the technical solutions with such changes or substitutions shall fall within the scope of protection of the invention.

## Claims

1. A cross-modal target state detection method, comprising:
performing sampling on an initial target detection sequence to obtain a sampled target detection sequence, wherein the sampled target detection sequence comprises at least a first sequence and a second sequence; the first sequence is a time frame sequence that is obtained at a first sampling frequency based on a target detection result of first modal data; the second sequence is a time frame sequence that is obtained at a second sampling frequency based on a target detection result of second modal data; and the sampled target detection sequence comprises a current time frame and a plurality of historical time frames in the initial target detection sequence;
performing feature extraction on each current target and each first historical target to obtain first feature information of the current target and historical feature information of the first historical target, wherein the current target is a target within the current time frame; and the first historical target is a target within each of the historical time frames;
obtaining second feature information of the current target based on the first feature information and the historical feature information of the first historical target; and
inputting the second feature information into a pre-trained state prediction network to obtain state information about the current target,
wherein the state information comprises velocity information and/or orientation information; and the state prediction network is obtained through training based on constraints for preventing an abrupt state change.

2. The cross-modal target state detection method according to claim 1, wherein the constraints for preventing an abrupt state change comprise at least one of a constraint for suppressing an abrupt target position change, a constraint for suppressing an abrupt target motion magnitude change, and a constraint for suppressing an abrupt target orientation change; and
the state prediction network being obtained through training based on constraints for preventing an abrupt state change comprises:
during the training of a network to be trained using training data, performing a parameter update on the network to be trained by using network update parameters until a training stop condition is met, to obtain the state prediction network,
wherein the network update parameters are obtained by:
obtaining a first network update parameters based on the constraint for suppressing an abrupt target position change and a training result of each training; and/or obtaining a second network update parameter based on the constraint for suppressing an abrupt target motion magnitude change and a training result of each training; and/or obtaining a third network update parameter based on the constraint for suppressing an abrupt target orientation change and a training result of each training; and
obtaining the network update parameters based on at least one of the first network update parameter, the second network update parameter, and the third network update parameter.

3. The cross-modal target state detection method according to claim 1 or 2, wherein
the current time frame is a time frame closest to a current moment in the first sequence and the second sequence; and the plurality of historical time frames are formed by arranging the remaining time frames in the first sequence and the second sequence in chronological order.

4. The cross-modal target state detection method according to any one of claims 1 to 3, wherein the obtaining second feature information of the current target based on the first feature information and the historical feature information of the first historical target comprises:
determining first mask attention information for the current time frame based on the first feature information and the historical feature information for the first historical target, wherein the first mask attention information is used to indicate a first historical target matching the current target; and
obtaining the second feature information of the current target based on the first mask attention information, the first feature information, and the historical feature information of the first historical target.

5. The cross-modal target state detection method according to claim 4, wherein the determining first mask attention information for the current time frame based on the first feature information and the historical feature information for the first historical target comprises:
performing association matching on the current target based on the first feature information and the historical feature information of the first historical target, to obtain an association matching result of the current target as the first mask attention information.

6. The cross-modal target state detection method according to claim 5, wherein the performing association matching on the current target based on the first feature information and the historical feature information of the first historical target, to obtain an association matching result of the current target comprises:
filtering out the first historical target based on preset second mask attention information, the first feature information and the feature information of the first historical target to obtain feature information of a second historical target, wherein the second mask attention information is used to indicate that there is no possibility of a match with the current target; and the second historical target is a historical target that has a possibility of matching with the current target; and
obtaining the association matching result based on the first feature information and the feature information of the second historical target.

7. The cross-modal target state detection method according to any one of claims 1 to 6, wherein the performing feature extraction on each current target and each first historical target to obtain first feature information of the current target and historical feature information of the first historical target comprises:
performing spatio-temporal positional embedding and encoding on the current target and the first historical target based on preset second mask attention information, to obtain the first feature information and the historical feature information of the first historical target,
wherein the spatio-temporal positional embedding is used to enhance a feature representation of the current target and a feature representation of the first historical target.

8. A cross-modal target state detection device, comprising at least one processor and a storage apparatus configured to store a plurality of program codes, and the program codes are adapted to be loaded and executed by the at least one processor to perform the cross-modal target state detection method according to any one of claims 1 to 7.

9. A smart device, comprising the cross-modal target state detection device according to claim 8.

10. A non-transitory computer-readable storage medium, storing a plurality of program codes, wherein the program codes are adapted to be loaded and executed by the at least one processor to perform the cross-modal target state detection method according to any one of claims 1 to 7.
